# EUROPEAN PATENT APPLICATION

(11) **EP 4 765 422 A1**
(43) Date of publication of application: **24.06.2026**
(21) Application number: 25831047.3
(22) Date of filing: 07.05.2025
(51) Int. Cl.: H01M 50/367, H01M 50/289, H01M 10/6556, H01M 10/613, H01M 10/6551

(54) **BATTERY PACK AND VEHICLE COMPRISING SAME**

(30) Priority: 19.06.2024 KR 20240079870
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR)
(74) Representative: BCKIP Part mbB
(86) International application number: PCT/KR2025/006114
(87) International publication number: WO 2025/263822

(57) **Abstract**

The present disclosure relates to a battery pack including: a plurality of battery cells; and a pack case configured to store the plurality of battery cells, and having a first venting channel formed corresponding to at least some of the plurality of battery cells and configured to be recessed inward from its inner surface such that venting gas generated from the battery cell flows thereinto.

## Description

### TECHNICAL FIELD

The present disclosure relates to a battery pack and, more specifically, to a battery pack with enhanced safety and a vehicle including the same.

This application is based on and claims priority from Korean Patent Application No. 10-2024-0079870, filed on June 19, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack.

When configuring a battery pack by connecting a plurality of battery cells in series/parallel, it is common to preferentially form a battery module including one or more battery cells described above and then add other components to one or more battery modules, thereby configuring a battery pack or battery rack. Alternatively, a battery pack has recently been manufactured in a cell-to-pack type in which a plurality of battery cells are directly stored in a pack housing, instead of being modularized.

However, in the case where a battery pack includes multiple battery modules therein, it may be vulnerable to a chain thermal reaction between the battery modules. For example, if an event such as thermal runaway occurs inside one battery module, the thermal runaway may propagate to other battery modules. If the propagation of thermal runaway between the battery modules fails to be properly suppressed, an event occurring in a specific battery module may cause a chain thermal reaction in other battery modules, leading to a severe problem such as an explosion or fire.

In particular, if an event such as thermal runaway occurs in any one battery module, venting gas or the like may be discharged to the outside. In this case, heat is likely to be transferred to other battery modules by the discharged venting gas or the like, causing a thermal chain reaction in other battery modules.

Therefore, it is necessary to develop a structure capable of minimizing the thermal energy transferred to adjacent battery modules when an event such as thermal runaway occurs in a battery pack, thereby preventing or suppressing thermal runaway propagation between the battery cells and/or battery modules.

### DISCLOSURE

### Technical Problem

The present disclosure is designed to solve the problems of the related art, and therefore the present disclosure is directed to providing a battery pack capable of preventing or suppressing thermal runaway propagation between battery modules by minimizing the thermal energy transferred to adjacent battery cells and/or battery modules when thermal runaway occurs in a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; and a pack case configured to store the plurality of battery cells, and having a first venting channel formed corresponding to at least some of the plurality of battery cells and configured to be recessed inward from its inner surface such that venting gas generated from the battery cell flows thereinto.

The first venting channel may be configured to extend along a longitudinal direction of the battery cell.

A plurality of first venting channels may be provided to be arranged along a stacking direction of the battery cell.

The first venting channel may be provided at a bottom of the plurality of battery cells.

The pack case may have a cooling channel formed at a bottom of the plurality of battery cells and configured such that a cooling medium flows therethrough.

The cooling channel may be located below the first venting channel.

The battery pack may further include a module case configured to store the plurality of battery cells and configured such that a bottom surface is at least partially open.

The battery pack may further include a cooling fin configured between some of the plurality of battery cells.

The cooling fin may be configured such that its end is inserted into a side of the pack case where the first venting channel is formed.

The cooling fin may be configured such that its end is provided between the first venting channels.

The pack case may have a second venting channel formed in a hollow structure inside the pack case, and configured to be connected to the first venting channel and to communicate with an outside of the pack case.

The pack case may include a base frame configured such that the plurality of battery cells are seated thereon and having the first venting channel formed in its inner space, and a side frame extending upward from an edge of the base frame and having the second venting channel formed in its inner space.

The pack case may have a connection hole formed to communicate the first venting channel and the second venting channel with each other.

The pack case may include a cross-beam configured to group the plurality of battery cells and having a third venting channel formed in its inner space to be in communication with the first venting channel and the second venting channel.

The pack case may include a venting device configured to communicate with the second venting channel and discharge venting gas of the second venting channel to the outside.

In addition, according to another aspect of the present disclosure, there is provided a vehicle including a battery pack according to the present disclosure.

### Advantageous Effects

According to one aspect of the present disclosure, it is possible to minimize a fluid such as a venting gas or the like from heading toward adjacent battery cells and/or battery modules. Therefore, thermal runaway propagation between the battery cells and/or battery modules can be prevented or suppressed, thereby ensuring the safety and reliability of the battery pack.

Furthermore, according to another aspect of the present disclosure, venting gas or the like generated from the battery module can be quickly discharged to the outside of the battery pack, thereby securing safe venting performance.

In addition, according to another aspect of the present disclosure, it is possible to secure efficient cooling performance of the battery pack by directly cooling the battery cells by a cooling medium.

In addition, according to another aspect of the present disclosure, it is possible to prevent or delay events, such as fire or explosion, due to thermal runaway in a device equipped with a battery pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of a battery pack according to an embodiment of the present disclosure.
FIG. 3 is a perspective view of the internal configuration of a battery pack according to an embodiment of the present disclosure, which illustrates a first venting channel.
FIG. 4 is a cross-sectional view of a battery pack according to an embodiment of the present disclosure, which may be a cross-sectional view taken, for example, along line I - I' in FIG. 1.
FIG. 5 is a bottom perspective view of a battery module included in a battery pack according to an embodiment of the present disclosure.
FIG. 6 is a perspective view of a battery cell included in a battery pack according to an embodiment of the present disclosure.
FIG. 7 is an enlarged view of part A in FIG. 4.
FIG. 8 is a cross-sectional view of a battery pack to which cooling fins are applied according to an embodiment of the present disclosure.
FIG. 9 is a cross-sectional view of a battery pack to which cooling fins are applied according to another embodiment of the present disclosure.
FIG. 10 is a cross-sectional view of a battery pack according to an embodiment of the present disclosure, which may be a cross-sectional view taken, for example, along line II - II' in FIG. 1.
FIG. 11 is an enlarged perspective view of a battery pack according to an embodiment of the present disclosure, which illustrates a connection hole.
FIG. 12 is a cross-sectional view of a battery pack according to an embodiment of the present disclosure, which may be a cross-sectional view taken, for example, along line I - I' in FIG. 1.
FIG. 13 is a cross-sectional view of a battery pack when viewed from above according to an embodiment of the present disclosure, which may be a cross-sectional view taken, for example, along line III - III' in FIG. 1.
FIG. 14 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

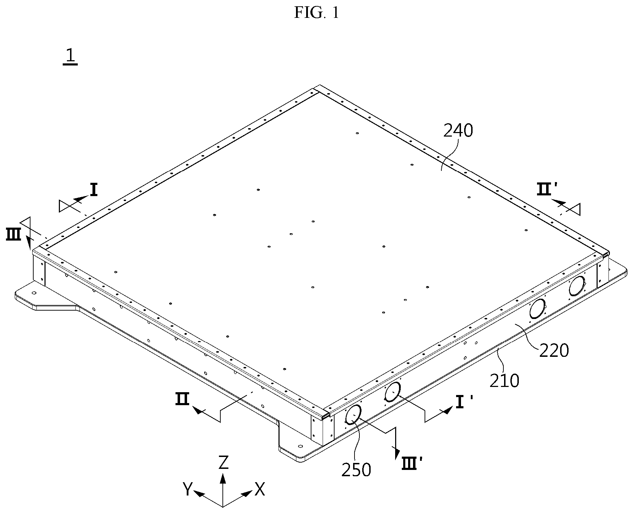

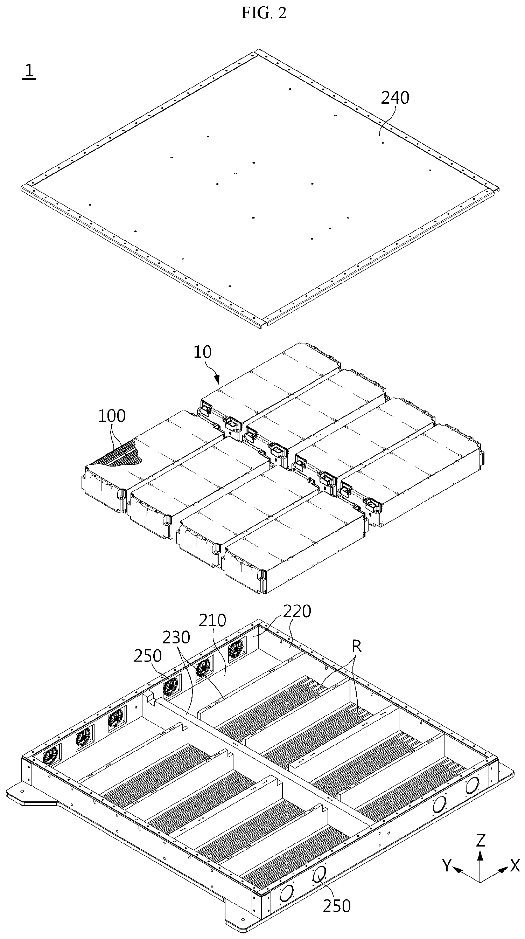

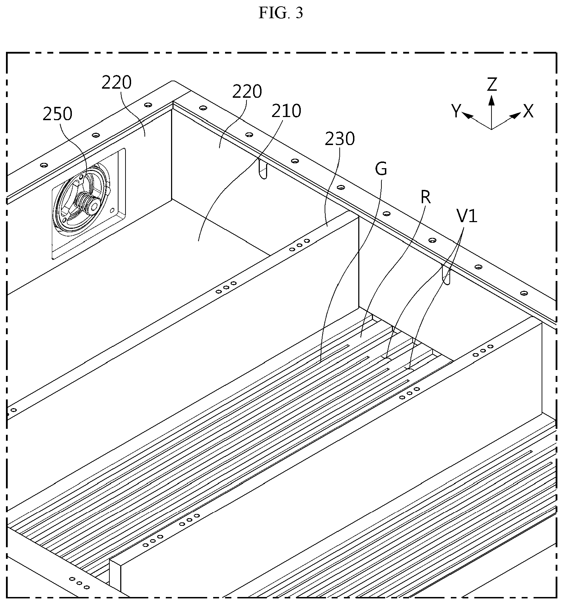

FIG. 1 is a perspective view of a battery pack according to an embodiment of the present disclosure, FIG. 2 is an exploded perspective view of a battery pack according to an embodiment of the present disclosure, and FIG. 3 is a perspective view of the internal configuration of a battery pack according to an embodiment of the present disclosure, which illustrates a first venting channel.

Referring to FIGS. 1 to 3, a battery pack 1 according to an embodiment of the present disclosure may include a battery cell 100 and a pack case 200.

First, referring to FIG. 2, a plurality of battery cells 100 may be included. In addition, although not shown in the drawing, the plurality of battery cells 100 may include an electrode assembly, a cell case that stores the electrode assembly, and an electrode lead that is connected to the electrode assembly and extends outward from the cell case to function as an electrode terminal. In this case, the plurality of battery cells 100 may be electrically connected to each other.

The plurality of battery cells 100 may be stacked in one direction. For example, as shown in FIG. 2, the plurality of battery cells 100 may be stacked along the front-back direction (X-axis direction) while standing in the vertical direction (Z-axis direction).

Meanwhile, the present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The pack case 200 may be configured to store a plurality of battery cells 100. The pack case 200 may be configured in a box shape including a plurality of frames. The pack case 200 may be made of a material capable of securing mechanical strength, such as a metal, for example, steel or SUS, or a plastic, or may include such a material in order to safely protect the battery cells 100 stored therein.

In addition, a first venting channel V1 may be formed in the pack case 200. The first venting channel V1 may indicate a passage through which venting gas or the like flows. The first venting channel V1 may be configured such that venting gas generated from the battery cell 100 flows therethrough. The first venting channel V1 may be configured to extend in at least one direction. In addition, the first venting channel V1 may be configured such that only its portion is recessed.

The first venting channel V1 may be configured to be recessed from the inner surface of the pack case 200. More specifically, a plurality of ribs R may be formed on the pack case 200, and the first venting channel V1 may be formed by the plurality of ribs R that are spaced apart from each other. That is, the first venting channel V1 may be defined as a space between two adjacent ribs R, and may provide a predetermined space through which venting gas flows. In this case, the rib R may be configured to extend in at least one direction.

According to the above-implemented configuration of the present disclosure, the venting gas or the like generated from the battery cell 100 may directly flow into the first venting channel V1 and move therethrough. As described above, the battery pack 1 according to the present disclosure, when high-temperature gas or flame is generated due to a thermal event occurring in a battery cell 100, may discharge the venting gas in a specific direction rather than all directions. Accordingly, the high-temperature gas or flame may be quickly discharged to the outside of the battery pack 1 through the first venting channel V1, so that thermal propagation to other battery cells 100 may be minimized.

In addition, when gas is generally emitted from the battery cell 100, electrode plate particles or active material particles heated to a high temperature may be discharged from the battery cell 100 to the outside, and these high-temperature particles may appear in the form of sparks. The battery pack 1 according to the present disclosure may prevent high-temperature particles emitted from the battery cell 100 from easily escaping directly to the outside of the battery pack 1, and may cause them to move through the space between the ribs R while sufficiently lowering the temperature and then to be discharged, thereby preventing them from acting as an ignition source outside the battery pack 1.

In addition, the first venting channel V1 may be provided corresponding to at least some of the plurality of battery cells 100. The first venting channels V1 may be configured to be respectively connected to at least some of the plurality of battery cells 100. As a result, the venting gas emitted from any battery cell 100 may be prevented from moving beyond the ribs R to another first venting channel V1.

According to the above-implemented configuration of the present disclosure, the venting gas may be prevented from flowing to other battery cells 100 by the first venting channel V1 provided for each of some battery cells 100, thereby preventing other battery cells 100 from being thermally damaged. Accordingly, thermal runaway propagation may be prevented or suppressed inside the battery pack 1, so that the safety and reliability of the battery pack 1 may be ensured.

Referring to FIGS. 1 and 2, the pack case 200 may include a base frame 210 and a plurality of side frames 220.

The base frame 210 may be configured such that a plurality of battery cells 100 are seated thereon. The base frame 210 may constitute the lower surface of the pack case 200 and may be configured in the form of a square plate. In addition, the base frame 210 may have a flat upper surface so that the battery cell 100 or battery module 10 may be stably seated thereon.

The plurality of side frames 220 may extend upward from respective edges of the base frame 210. The plurality of side frames 220 may be configured to surround the plurality of battery modules 100. More specifically, the plurality of side frames 220 may have a right wall located at an end of the base frame 210 to the +X-axis direction, a rear wall located at an end to the +Y-axis direction, a left wall located at an end to the -X-axis direction, and a front wall located at an end to the -Y-axis direction, respectively, to form the side surfaces of the pack case 200.

In addition, the pack case 200 may include a cross-beam 230. The cross-beam 230 may be configured to partition the inner space of the pack case 200. The cross-beam 230 may be configured to partition a plurality of battery cells 100 or a plurality of battery modules 10. The cross-beam 230 may be configured to extend along the left-right direction and/or the front-back direction of the pack case 200.

A plurality of cross-beams 230 may be provided. The cross-beam 230 may be configured to connect side frames 220 facing each other, among the plurality of side frames 220. For example, as illustrated in FIG. 2, the stack of the plurality of battery cells 100 may be partitioned and disposed into four rows and two columns by the cross-beams 230.

Meanwhile, the pack case 200 may further include a cover frame 240. The cover frame 240 may be configured to cover the top of the plurality of battery cells 100. The cover frame 240 may be configured to form the upper surface of the pack case 200. The cover frame 240 may be coupled to the side frame 220. Alternatively, the cover frame 240 may be configured integrally with the side frame 220.

Hereinafter, the configuration of the pack case 200 including the first venting channel V1 will be described in more detail with reference to FIGS. 1 to 3.

Referring to FIG. 3, the first venting channel V1 may be configured to extend along the longitudinal direction of the battery cell 100. The first venting channel V1 may be configured in a straight shape. In particular, the battery cell 100 may be configured in a pouch-type, and the length of the first venting channel V1 may be configured to correspond to the length of the battery cell 100.

The ribs R and the first venting channel V1 may be formed as the pack case 200 is produced by extrusion. As the pack case 200 is produced by extrusion, the ribs R may be formed to extend in one direction (X-axis direction) along the extrusion direction of the pack case 200. According to the above-implemented configuration of the present disclosure, since the ribs R are provided integrally with the pack case 200, a process of combining the ribs R to the pack case 200 is unnecessary, and there is no defect at the coupling portion, so the possibility of the venting gas spreading to another first venting channel V1 may be further reduced.

In addition, a plurality of first venting channels V1 may be provided. The plurality of first venting channels V1 may be arranged along the stacking direction of the battery cell 100. In addition, the plurality of first venting channels V1 may be arranged parallel to each other.

According to the above-implemented configuration of the present disclosure, since the first venting channels V1 extending along one direction are arranged to be spaced apart from each other along the stacking direction of the battery cell 100, when a thermal event occurs in a battery cell 100, the venting gas flowing into the first venting channel V1 may be further suppressed from heading beyond the rib R to another first venting channel V1. In addition, the venting gas flowing through the first venting channel V1 may be prevented from spreading in all directions, and may quickly move to the outside along the extension direction of the first venting channel V1.

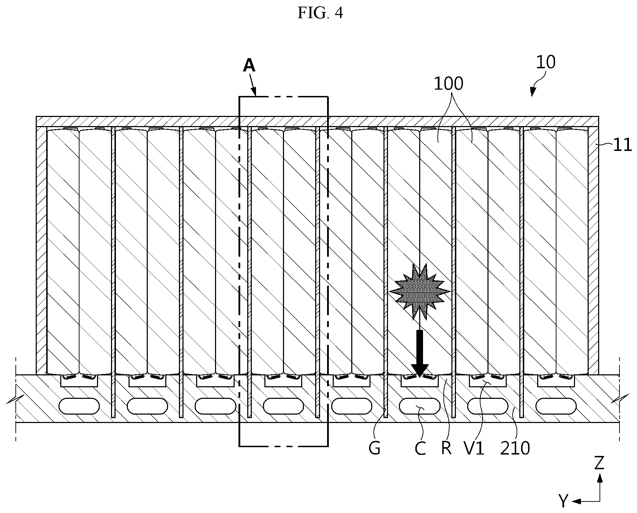

FIG. 4 is a cross-sectional view of a battery pack according to an embodiment of the present disclosure, which may be a cross-sectional view taken, for example, along line I - I' in FIG. 1.

In particular, referring to FIG. 4, the first venting channel V1 may be provided at the bottom of a plurality of battery cells 100. That is, the rib R and the first venting channel V1 may be formed on the bottom surface of the pack case 200, i.e., the base frame 210. The plurality of battery cells 100 may be configured to be seated on the ribs R. That is, the plurality of battery cells 100 may be stored inside the pack case 200 while being supported by the ribs R.

Accordingly, when a thermal event occurs in the battery cell 100, the venting gas or the like may move directly to the first venting channels V1 located at the bottom. According to the above-implemented configuration of the present disclosure, when a high-temperature gas or flame is discharged from the battery cell 100 in a situation such as thermal runaway, the discharged gas or flame may not move upward. In particular, according to an embodiment of the present disclosure, in the case where a passenger is located above the battery pack 1, for example, in an electric vehicle, directional venting may be performed toward the bottom of the battery pack 1, thereby suppressing or delaying gas or flames from heading toward the passenger. As a result, the safety of the battery pack 1 and a device including the battery pack 1 may be improved.

A cooling channel C may be formed in the pack case 200. The cooling channel C may indicate a passage configured to allow a cooling medium such as cooling water to flow. The cooling channel C may be formed in the inner space of the pack case 200. Here, the inner space of the pack case 200 may indicate a predetermined space separately provided inside the pack case 200, or may indicate a hollow space formed by a plurality of beams or frames constituting the pack case 200.

In particular, the cooling channel C may be provided at the bottom of the plurality of battery cells 100. That is, the cooling channel C may be provided in the base frame 210. For example, a hollow space may be formed in the base frame 210 so that a cooling medium may flow through the hollow space. Alternatively, the cooling channel C may be configured in the form of a pipe in the inner space of the base frame 210.

According to the above-implemented configuration of the present disclosure, since the bottom surface of the battery cell 100 or the battery module 10 may be cooled, accumulation of the thermal energy may be minimized in the battery cell 100. In particular, the heat generation of the battery cell 100 due to the charge/discharge cycle in the normal state of the battery pack 1 may be minimized, thereby securing the cooling performance of the battery pack 1.

The cooling channel C may be provided at least on one side of the first venting channel V1. In addition, the first venting channel V1 and the cooling channel C may be configured to face each other. The cooling channel C may be provided parallel to the first venting channel V1. The first venting channel V1 may extend along one direction, and the cooling channel C may extend along one direction in which the first venting channel V1 extends. That is, the cooling channel C may be disposed parallel to the first venting channel V1. Accordingly, the venting gas or the like inside the first venting channel V1 may come into contact with the cooling channel C.

For example, although not shown in the drawing, the cooling channel C may be disposed to overlap the first venting channel V1 in the horizontal direction. In this case, the cooling channel C may be provided between the plurality of first venting channels V1. Alternatively, as disclosed in the embodiment illustrated in FIG. 4, the cooling channel C may be disposed to overlap the first venting channel V1 in the vertical direction.

According to the above-implemented configuration of the present disclosure, when thermal runaway occurs in the battery cell 100, the heat of the venting gas or flame inside the first venting channel V1 may be more efficiently cooled by the cooling medium in the cooling channel C.

Furthermore, the cooling channel C may be located further outward than the first venting channel V1. That is, the cooling channel C may be located further outward than the first venting channel V1 from a certain battery cell 100. For example, as disclosed in the embodiment illustrated in FIG. 4, the first venting channel V1 may be located at the bottom of the battery cell 100, and the cooling channel C may be located below the first venting channel V1.

According to the above-implemented configuration of the present disclosure, since the first venting channel V1 is disposed between the battery cell 100 and the cooling channel C, the venting gas or flame generated from the battery cell 100 may quickly move to the first venting channel V1 and may also be cooled by the cooling medium in the cooling channel C. That is, According to the above-implemented configuration of the present disclosure, the heat of the discharged venting gas or the like may be controlled more efficiently. As a result, the cooling performance of the battery pack 1 may be secured.

The cooling channel C may be provided at the bottom of each of the first venting channels V1. That is, the cooling channel C may be disposed to overlap the first venting channel V1 in the vertical direction. According to the above-implemented configuration of the present disclosure, since the cooling channel C is provided for each of the first venting channels V1, the first venting channel V1 provided on the side of the battery cell 100 where a thermal event occurs may be independently cooled. Accordingly, the cooling efficiency of the battery pack 1 may be improved.

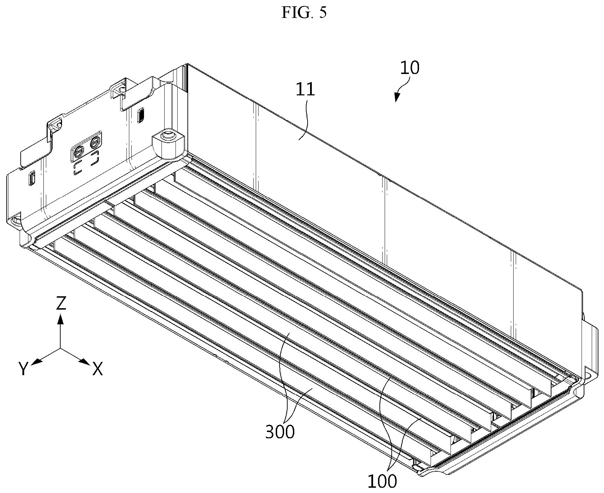

FIG. 5 is a bottom perspective view of a battery module included in a battery pack according to an embodiment of the present disclosure.

Referring to FIG. 2 and FIG. 5, a plurality of battery cells 100 may be modularized into one or more battery modules 10. That is, the battery pack 1 according to the present disclosure may include a plurality of battery modules 10, and a plurality of battery cells 100 included in the battery pack 1 may be divided and included in the plurality of battery modules 10. In this case, the plurality of battery cells 100 included in the battery module 10 may be electrically connected to each other.

In particular, the battery pack 1 according to the present disclosure may include a module case 11. The module case 11 may have an empty space formed therein, and may be configured to store at least some of the plurality of battery cells 100 in the inner space. In particular, the module case 11 may be configured to store the battery cells 100. That is, the module case 11 may group a plurality of battery cells 100 into a plurality of battery modules 10, and may be a boundary that physically confines the inner space of each battery module 10.

In addition, although not shown in the drawing, the battery module 10 may include a bus-bar assembly and/or a module terminal electrically connected to a plurality of battery cells 100 stored therein.

Furthermore, the battery module 10 according to an embodiment of the present disclosure may be configured such that the bottom surface of the module case 11 is at least partially open. For example, although not shown in the drawing, a venting hole may be formed in the lower side of the module case 11. The venting hole may be formed by perforating the lower side of the module case 11. The venting hole may be configured such that gas generated from a battery cell 100 stored inside the module case 11 is discharged to the outside of the module case 11.

Alternatively, as disclosed in the embodiment illustrated in FIG. 5, the lower side of the module case 11 may be configured to be completely open. Accordingly, the module case 11 may be configured to cover five sides, excluding the lower side, among the six sides of the plurality of battery cells 100. In this case, the module case 11 may be configured in an n-shape.

According to the above-implemented configuration of the present disclosure, venting gas or flames generated from the battery cell 100 inside the module case 11 may flow directly into the first venting channel V1 provided at the bottom. Therefore, the venting gas generated in the battery module 10 may be quickly discharged to the outside of the battery pack 1, thereby ensuring safe venting performance of the battery pack 1.

In addition, According to the above-implemented configuration of the present disclosure, since the module case 11 does not have a lower side, the battery cell 100 and the cooling channel C may directly face each other. Accordingly, the cooling medium in the cooling channel C may directly cool the battery cells 100, thereby ensuring efficient cooling performance of the battery pack 1.

Referring back to FIG. 2, the first venting channel V1 may be provided in each storage space of the pack case 200 in which the battery module 10 is installed. That is, the first venting channels V1 provided in respective storage spaces may be configured not to communicate with each other.

According to the above-implemented configuration of the present disclosure, when a thermal event occurs in a battery module 10, venting gas or the like may be prevented from moving to adjacent battery modules 10 through the first venting channel V1. Therefore, the thermal propagation prevention performance between the battery modules 10 may be improved.

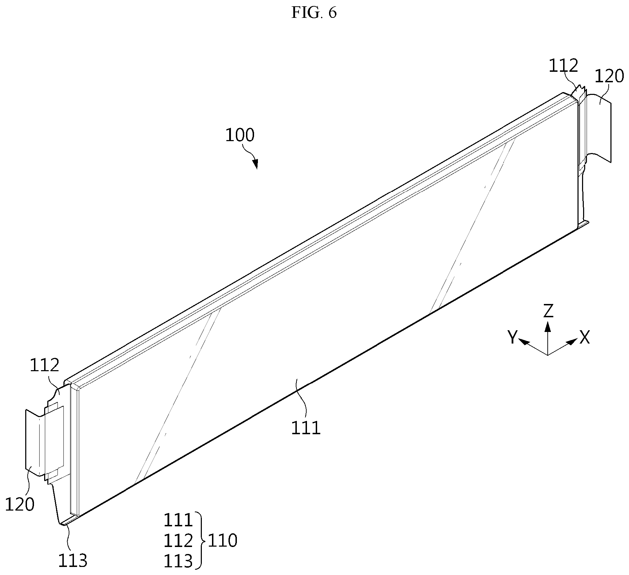

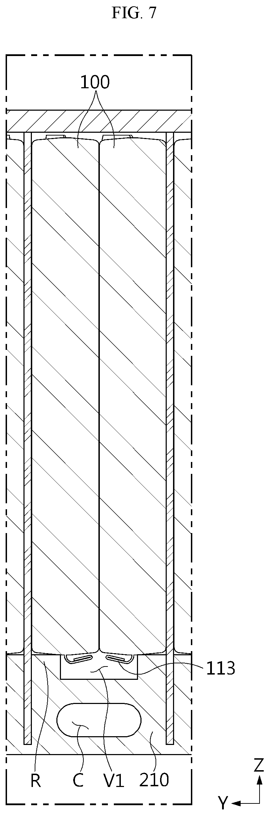

FIG. 6 is a perspective view of a battery cell included in a battery pack according to an embodiment of the present disclosure, and FIG. 7 is an enlarged view of part A in FIG. 4.

According to an embodiment of the present disclosure, the battery cell 100 may be a pouch-type secondary battery. A cell case 110 of such a pouch-type secondary battery may be configured in the form of a pouch in which a metal layer made of aluminum is interposed between polymer layers.

For example, a battery cell 100 according to an embodiment of the present disclosure may have a long side in the X-axis direction and a short side in the Z-axis direction in FIG. 6, and may have a thickness in the Y-axis direction, which is smaller than the length in the X-axis or Z-axis direction in FIG. 6, forming an approximately rectangular plate-shaped cell. In this case, an electrode lead 120 may be formed on the short side of the battery cell 100 (to the Y-axis direction in FIG. 6).

The cell case 110 of the battery cell 100 may store an electrode assembly in a receiving portion 111, and the edge of the receiving portion 111 may be heat-welded to form a sealing portion 112. The sealing portion 112 may be provided on three of the four sides of the battery cell 100. For example, in each battery cell 100, the sealing portions 112, excluding the upper side where the sheet is folded, may face in the front-back direction (X-axis direction in FIG. 6) and the downward direction (-Z-axis direction) of the battery cell 100, respectively, and the receiving portion 111 may face in the left-right direction (Y-axis direction).

In addition, the battery cell 100 may include a folding portion 113 configured to be bent on one side of the sealing portions 112 where the electrode lead 120 does not extend. That is, the folding portion 113 may be included on the side of the sealing portion 112 where the electrode lead 120 is not configured.

The plurality of battery cells 100 may be arranged in parallel along the Y-axis direction while standing in the vertical direction (Z-axis direction). As a result, it may be an efficient structure for increasing energy density by stacking multiple battery cells 100 face to face. In addition, if the battery cells 100 are disposed in this manner, it is easy to control the venting direction to one side.

In particular, as shown in FIG. 7, the battery cell 100 may be provided in a standing state with the folding portion 113 facing downward. According to the above-implemented configuration of the present disclosure, downward venting toward the folding portion 113 may be induced. Accordingly, in the case where venting of the battery cell 100, the venting gas may quickly move to the first venting channel V1 located at the bottom of the battery cell 100.

Referring to FIG. 7, in the case where the battery cell 100 of the present disclosure is configured as a pouch-type battery cell, the first venting channel V1 may be provided for every two battery cells 100, and the two battery cells 100 may be configured to face each other. That is, the folding portions 113 of the two battery cells 100 may also be configured to face each other. In this case, the folding portions 113 may be located in the first venting channel V1. For example, as disclosed in the embodiment illustrated in FIG. 7, the folding portion 113 may be provided inside the first venting channel V1. Alternatively, the folding portion 113 may be configured to be folded toward the first venting channel V1, and to be unfolded when the internal pressure of the battery cell 100 increases so as to be positioned inside the first venting channel V1.

According to the above-implemented configuration of the present disclosure, when the internal pressure of the battery cell 100 increases, the folding portion 113 may be unfolded, so that the discharged venting gas may directly head to the first venting channel V1. That is, According to the above-implemented configuration of the present disclosure, the high-temperature gas emitted downward may be quickly discharged into the first venting channel V1 through the venting structure of the battery cell 100.

Although, in the embodiments shown in FIG. 7 or the like, the folding portion 113 is illustrated to face downward, unlike the above-described embodiments, the battery cell 100 may be disposed such that the folding portion 113 faces upward. In this case, the battery cell 100 may be disposed such that the side without the folding portion 113 directly faces the cooling channel C. As a result, since the cooling medium in the cooling channel C may directly cool the battery cell 100, efficient cooling performance of the battery pack 1 may be secured.

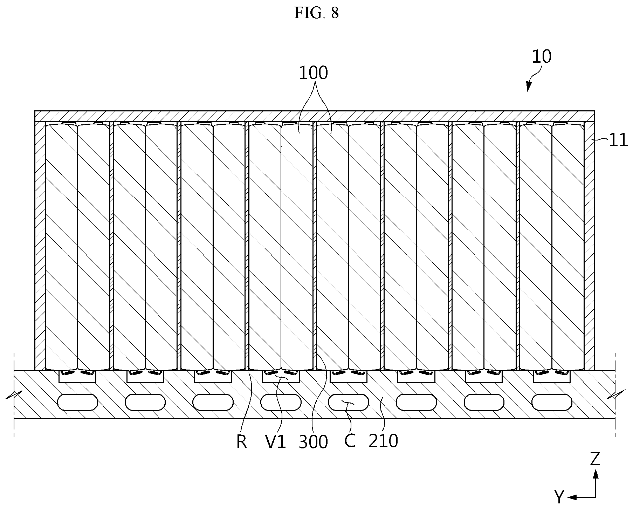

FIG. 8 is a cross-sectional view of a battery pack to which cooling fins are applied according to an embodiment of the present disclosure.

Referring to FIG. 8, the battery pack 1 according to an embodiment of the present disclosure may further include a cooling fin 300. The cooling fin 300 may be provided between some of the plurality of battery cells 100. In particular, the cooling fin 300 may be configured to partition the plurality of battery cells 100. The cooling fin 300 may be configured to group the plurality of battery cells 100. For example, as illustrated in FIG. 8, the cooling fin 300 may be disposed for every two battery cells 100 so as to group the battery cells 100 into sets of two.

At least one cooling fin 300 may be included in each battery module 10. The cooling fin 300 may be provided in the inner space of the module case 11.

A plurality of cooling fins 300 may be provided in a direction in which the battery cells 100 are arranged. The plurality of cooling fins 300 may be arranged along the stacking direction of the battery cells 100. In addition, the cooling fin 300 may be configured to extend along the longitudinal direction of the battery cell 100.

The cooling fin 300 may be configured to cool the heat generated when a thermal event occurs in the battery cell 100. The cooling fin 300 may be configured in contact with the battery cell 100. Accordingly, when heat is generated from the battery cell 100, the heat may be cooled by the cooling fin 300.

To this end, the cooling fin 300 may be made of a material having excellent cooling performance. In addition, the cooling fin 300 may be configured so as not to deform even at high temperature and high pressure and so as to maintain a sealed structure. The cooling fin 300 may be configured as a pad that is thinner than the battery cell 100. For example, the cooling fin 300 may be made of a material such as insulated SUS or aluminum.

According to the above-implemented configuration of the present disclosure, even if a thermal event occurs in any battery cell 100 that is in contact with the cooling fin 300, the heat of the battery cell 100 may be quickly cooled by the cooling fin 300, so that the cooling efficiency of the battery pack 1 may be maximized.

Meanwhile, the cooling fin 300 may be configured to extend further upward than the battery cell 100. That is, the vertical height of the cooling fin 300 may be configured longer than the vertical height of the battery cell 100. Furthermore, the cooling fin 300 may be configured such that the upper end comes into contact with the inner surface of the module case 11.

According to the above-implemented configuration of the present disclosure, since the gap between the cooling fin 300 and the module case 11 is minimized by the cooling fin 300, the space in which the venting gas may flow inside the module case 11 may be reduced, thereby blocking the movement of the venting gas or the like.

Accordingly, even if a thermal event occurs in any battery cell 100, the venting gas, flame, and/or particles may be suppressed from moving to another group of battery cells 100. The propagation of thermal runaway between the battery cells 100 may be effectively prevented or delayed. Therefore, the safety and reliability of the battery module 10 may be ensured.

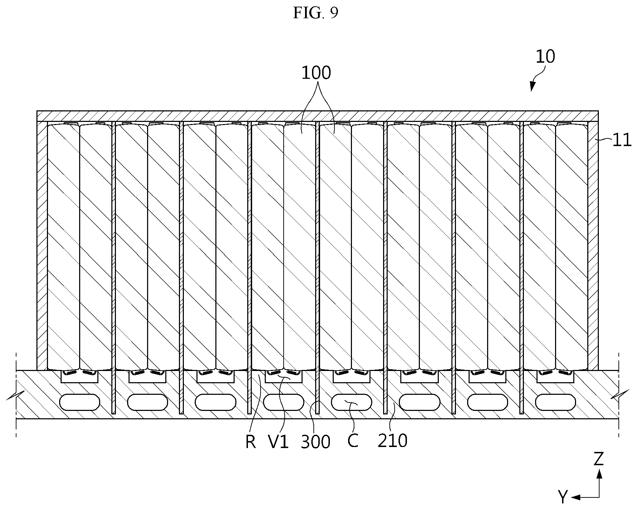

FIG. 9 is a cross-sectional view of a battery pack to which cooling fins are applied according to another embodiment of the present disclosure.

As another embodiment, in order to improve the fixing force between the pack case 200 and the cooling fin 300, the cooling fin 300 may be configured such that its end is inserted into the pack case 200. In particular, the cooling fin 300 may be configured such that its end is inserted into the side of the pack case 200 where the first venting channel V1 is formed. For example, the lower end of the cooling fin 300 may be configured to be inserted into the rib R formed on the base frame 210. The cooling fin 300 may be configured to penetrate the module case 11 outward such that the end is inserted into the base frame 210.

More specifically, referring to FIG. 9, the pack case 200 may have a fixing groove G formed such that at least a portion thereof is recessed inward. The fixing groove G may be formed in the rib R. The cooling fin 300 may be configured to be inserted into the fixing groove G. Accordingly, the lower end of the cooling fin 300 may be in close contact with the fixing groove G without a gap.

According to the above-implemented configuration of the present disclosure, since the cooling fin 300 is inserted into the pack case 200 and supported on both sides, the fixing force between the cooling fin 300 and the pack case 200 may be further improved. Furthermore, According to the above-implemented configuration of the present disclosure, it is possible to reduce the possibility that the cooling fin 300 is pushed out by high-temperature and high-pressure venting gas or flame, or that the cooling fin 300 is deformed to be bent by the internal pressure of the venting gas so that the battery cell 100 and the cooling fin 300 are separated. As a result, the arrangement state of the battery cell 100 and the cooling fin 300 may be stably maintained, thereby improving the cooling performance.

In addition, the sealing force between the end of the cooling fin 300 and the pack case 200 may be stably secured. Therefore, according to the above-implemented configuration, the plurality of battery cells 100 may be more reliably partitioned and separated, and thus the thermal propagation prevention performance between the battery cells 100 may be further improved.

Furthermore, as disclosed in the embodiment illustrated in FIG. 9, the cooling fin 300 may be configured such that its end is provided between the first venting channels V1. Furthermore, the cooling fin 300 may be configured such that its end is provided between the cooling channels C.

According to the above-implemented configuration of the present disclosure, the venting gas or the like in the first venting channel V1 may be cooled by the cooling fin 300 as well as by the cooling channel C. Accordingly, the cooling efficiency of the battery pack 1 may be further improved.

Furthermore, According to the above-implemented configuration of the present disclosure, the end of the cooling fin 300 may be configured to partition the plurality of first venting channels V1. As a result, the plurality of first venting channels V1 may be more reliably partitioned and separated, thereby further improving the thermal propagation prevention performance between the battery cells 100.

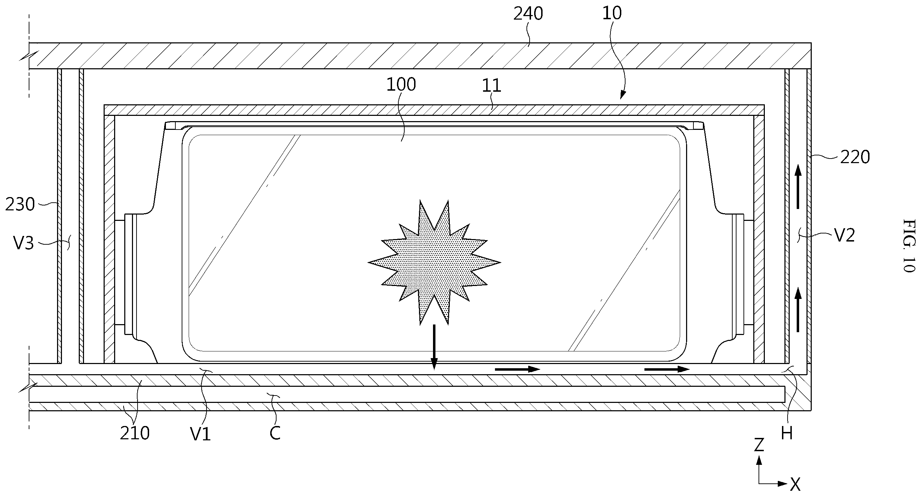

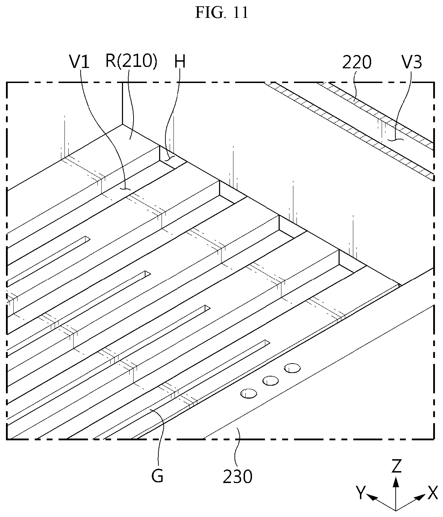

FIG. 10 is a cross-sectional view of a battery pack according to an embodiment of the present disclosure, which may be a cross-sectional view taken, for example, along line II - II' in FIG. 1. In addition, FIG. 11 is an enlarged perspective view of a battery pack according to an embodiment of the present disclosure, which illustrates a connection hole.

The pack case 200 may have a second venting channel V2 formed therein. The second venting channel V2 may be configured as a hollow structure inside the pack case 200. That is, the second venting channel V2 may be defined as a hollow space formed in one of the frames of the pack case 200. The second venting channel V2 may be configured to communicate with the first venting channel V1. In addition, the second venting channel V2 may be configured to communicate with the outside of the pack case 200.

As a more specific example, as disclosed in the embodiment illustrated in FIGS. 10 and 11, the first venting channel V1 may be formed in the inner space of the base frame 210, and the second venting channel V2 may be formed in the inner space of the side frame 220. The second venting channel V2 may be formed in all four walls of the side frame 220.

Accordingly, as indicated by the bold arrows in FIG. 10, the venting gas or the like generated from the battery cell 100 may move to the first venting channel V1 formed in the base frame 210 and then move to the second venting channel V2 formed in the side frame 220. This venting gas may be discharged to the outside of the pack case 200.

In order to connect the first venting channel V1 and the second venting channel V2, the pack case 200 may have a connection hole H formed therein. The connection hole H may be configured to communicate the first venting channel V1 and the second venting channel V2 with each other. In the embodiment shown in FIG. 10 and FIG. 11, the connection hole H may be provided between the first venting channel V1 and the second venting channel V2. That is, the connection hole H may be provided between the base frame 210 and the side frame 220.

Referring to FIG. 11, the connection hole H may be provided on the inner surface of the side frame 220. The connection hole H may be provided on the surface of the side frame 220, which faces the battery cell 100 or the battery module 10. The connection hole H may be provided closer to the base frame 210 in the side frame 220. The connection hole H may be formed by being surrounded by two adjacent ribs R and the side frame 220.

A plurality of connection holes H may be configured. For example, the plurality of connection holes H may be provided along the arrangement direction of the first venting channels V1. Furthermore, each of the connection holes H may be provided for each first venting channel V1. That is, the connection holes H may be configured to correspond one-to-one to the plurality of first venting channels V1. The connection hole H may be provided at respective portions where the plurality of first venting channels V1 are connected to the side frame 220.

According to the above-implemented configuration of the present disclosure, the venting gas generated from any one battery cell 100 may flow into the first venting channel V1 connected to the battery cell 100, and may move to the second venting channel V2 through the connection hole H connected to the first venting channel V1. Therefore, the possibility that the venting gas will spread to another first venting channel V1 may be extremely reduced by the ribs R defining the first venting channel V1.

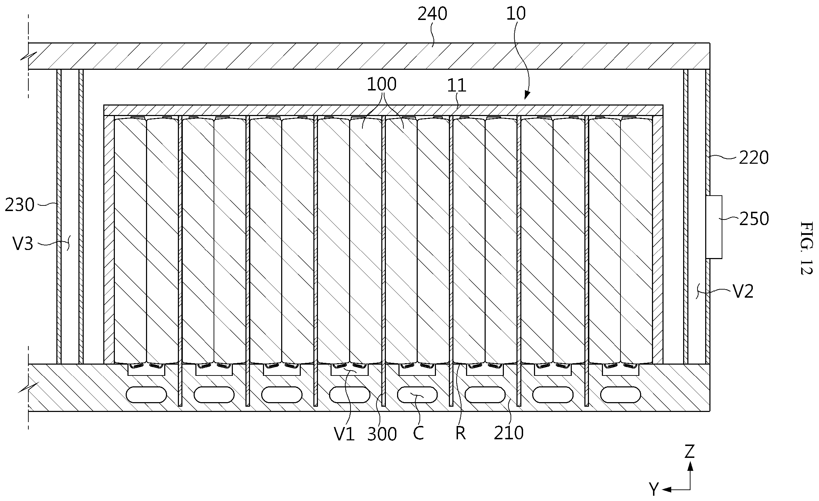

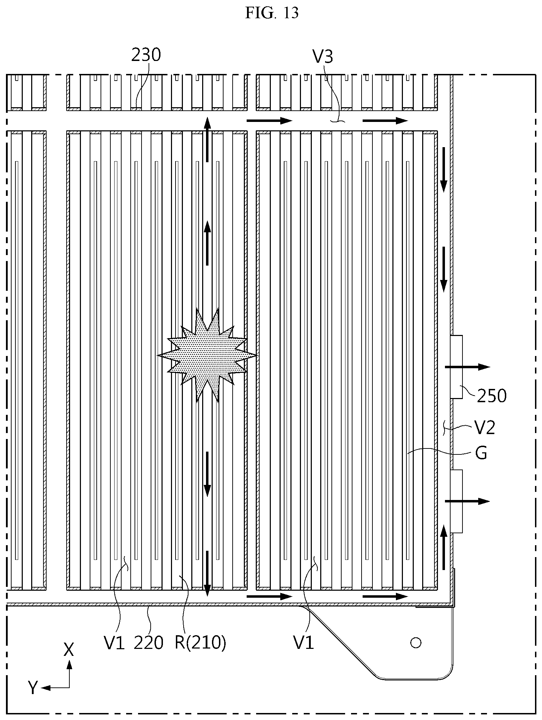

FIG. 12 is a cross-sectional view of a battery pack according to an embodiment of the present disclosure, which may be a cross-sectional view taken, for example, along line I - I' in FIG. 1. In addition, FIG. 13 is a cross-sectional view of a battery pack when viewed from above according to an embodiment of the present disclosure, which may be a cross-sectional view taken, for example, along line III - III' in FIG. 1.

A third venting channel V3 may be formed in the pack case 200. The third venting channel V3 may be configured as a hollow structure inside the pack case 200. That is, the third venting channel V3 may be defined as a hollow space formed in one of the frames of the pack case 200. The third venting channel V3 may be configured to be in communication with the first venting channel V1 and the second venting channel V2. As a more specific example, as disclosed in the embodiment illustrated in FIG. 12 and FIG. 13, the third venting channel V3 may be formed in the inner space of the cross-beam 230.

Accordingly, as indicated by the bold arrows in FIG. 13, the venting gas or the like generated from the battery cell 100 may move to the first venting channel V1 formed in the base frame 210, and may then move to the third venting channel V3 formed in the cross-beam 230, as well as to the second venting channel V2 formed in the side frame 220.

According to the above-implemented configuration of the present disclosure, the venting gas or the like discharged from the battery cell 100 or battery module 10 in contact with the cross-beam 230 may move directly to the third venting channel V3 formed in the cross-beam 230, so that the venting gas or the like may be discharged more quickly to the outside of the pack case 200.

In this case, the connection hole H may be configured to communicate the first venting channel V1 and the second venting channel V2 with each other. The connection hole H may be provided between the first venting channel V1 and the third venting channel V3. That is, the connection hole H may be provided between the base frame 210 and the cross-beam 230. That is, the connection hole H may be provided on both sides of the first venting channel V1 in the longitudinal direction. In addition, the connection hole H may be provided on the outer surface of the cross-beam 230.

According to the above-implemented configuration of the present disclosure, the venting gas generated from any one battery cell 100 may flow into the first venting channel V1 connected to the battery cell 100, and may move to the third venting channel V3 through the connection hole H connected to the first venting channel V1.

Referring to FIG. 12 and FIG. 13, the pack case 200 may include a venting device 250.

The venting device 250 may be configured to discharge gas generated from the battery cell 100 to the outside of the pack case 200. The venting device 250 may be configured to be opened by the pressure of the venting gas when the internal pressure of the pack case 200 increases due to the venting gas generated therein, thereby discharging the venting gas to the outside of the pack case 200.

The venting device 250 may be configured to be opened and closed depending on the internal pressure inside the pack case 200. Alternatively, the venting device 250 may be configured in the form of a hole. The present disclosure is not limited to a specific type or form of the venting device 250, and various venting devices 250 known at the time of filing the present disclosure may be applied to configure the battery pack 1 of the present disclosure.

Specifically, the venting device 250 may be provided on the side of the pack case 200, that is, on the side frame 220. A plurality of venting devices 250 may be provided. The venting device 250 may be provided on one or more of the plurality of side frames 220. The venting devices 250 may be formed respectively on two or more side frames 220, or two or more venting devices 250 may be formed on one side frame 220

The number or locations of the venting devices 250 described in the embodiment in FIG. 13 are merely examples, and may be changed to various other numbers or locations.

The venting device 250 may be configured to be in communication with the second venting channel V2 formed in the side frame 220. Accordingly, the venting gas of the second venting channel V2 may be configured to be discharged to the outside of the pack case 200 through the venting device 250.

Referring to FIG. 13, the direction in which the venting gas is discharged when a high-temperature venting gas or flame is generated in a battery cell 100 will be described in detail. The venting gas may flow into the first venting channel V1 located at the bottom of the battery cell 100, and the venting gas flowing through the first venting channel V1 may flow into the second venting channel V2 and/or the third venting channel V3 through the connection holes H configured on both sides (see the bold arrows in FIG. 13). Thereafter, the venting gas flowing through the third venting channel V3 may move to the second venting channel V2. This venting gas may be discharged to the outside of the pack case 200 through a venting device 250 that is in communication with the second venting channel V2.

According to the above-implemented configuration of the present disclosure, since the venting gas or the like may directly move to the second venting channel V2 of the side frame 220 equipped with the venting device 250, the venting gas or the like may be quickly discharged to the outside of the pack case 200.

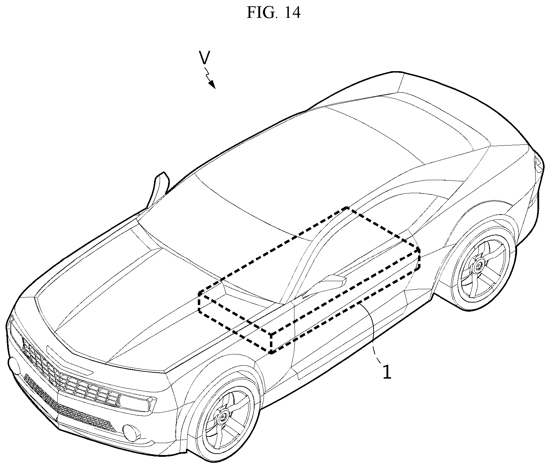

FIG. 14 is a schematic perspective view of a vehicle including a battery pack according to an embodiment of the present disclosure.

Referring to FIG. 14, a vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V may include a four-wheel vehicle and a two-wheel vehicle. The vehicle V may be operated by power supplied from the battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells; and
a pack case configured to store the plurality of battery cells, and having a first venting channel formed corresponding to at least some of the plurality of battery cells and configured to be recessed inward from its inner surface such that venting gas generated from the battery cell flows thereinto.

2. The battery pack according to claim 1,
wherein the first venting channel is configured to extend along a longitudinal direction of the battery cell.

3. The battery pack according to claim 1,
wherein a plurality of first venting channels are provided to be arranged along a stacking direction of the battery cell.

4. The battery pack according to claim 1,
wherein the first venting channel is provided at a bottom of the plurality of battery cells.

5. The battery pack according to claim 1,
wherein the pack case has a cooling channel formed at a bottom of the plurality of battery cells and configured such that a cooling medium flows therethrough.

6. The battery pack according to claim 5,
wherein the cooling channel is located below the first venting channel.

7. The battery pack according to claim 1,
further comprising a module case configured to store the plurality of battery cells and configured such that a bottom surface is at least partially open.

8. The battery pack according to claim 1,
further comprising a cooling fin configured between some of the plurality of battery cells.

9. The battery pack according to claim 8,
wherein the cooling fin is configured such that its end is inserted into a side of the pack case where the first venting channel is formed.

10. The battery pack according to claim 8,
wherein the cooling fin is configured such that its end is provided between the first venting channels.

11. The battery pack according to claim 1,
wherein the pack case
has a second venting channel formed in a hollow structure inside the pack case, and configured to be connected to the first venting channel and to communicate with an outside of the pack case.

12. The battery pack according to claim 11,
wherein the pack case comprises
a base frame configured such that the plurality of battery cells are seated thereon and having the first venting channel formed in its inner space, and
a side frame extending upward from an edge of the base frame and having the second venting channel formed in its inner space.

13. The battery pack according to claim 11,
wherein the pack case has
a connection hole formed to communicate the first venting channel and the second venting channel with each other.

14. The battery pack according to claim 11,
wherein the pack case comprises
a cross-beam configured to group the plurality of battery cells and having a third venting channel formed in its inner space to be in communication with the first venting channel and the second venting channel.

15. The battery pack according to claim 11,
wherein the pack case comprises
a venting device configured to communicate with the second venting channel and to discharge venting gas of the second venting channel to the outside.

16. A vehicle comprising a battery pack according to any one of claims 1 to 15.
